# EUROPEAN PATENT SPECIFICATION

(11) **EP 0 842 894 B1**
(45) Date of publication and mention of the grant of the patent: **28.02.2001**
(21) Application number: 97119515.1
(22) Date of filing: 07.11.1997
(51) Int. Cl.: C01B 3/38

(54) **Process for catalytic partial oxidation of a hydrocarbon**
Verfahren zur katalytischen Teiloxidation eines Kohlenwasserstoffs
Méthode pour l'oxydation partielle catalytique d'un hydrocarbure

(30) Priority: 15.11.1996 US 30847 P
(43) Date of publication of application: 20.05.1998
(73) Proprietor: Haldor Topsoe A/S, 2800 Lyngby (DK)
(72) Inventor: Primdahl, Ivar Ivarsen, 2400 Copenhagen NV (DK)

(56) References cited:
- EP-A- 0 155 867
- EP-A- 0 330 751
- GB-A- 2 274 284

## Description

### BACKGROUND OF THE INVENTION

It is known to prepare synthesis gas compositions consisting of hydrogen and carbon monoxide and containing very low content of methane and carbon dioxide by passing over a catalyst of hydrocarbon substrate, usually natural gas or methane mixed with oxygen at preheated temperature in the range of, e.g. 300-400°C.

The processes are typically performed in the presence of a noble metal catalyst, such as rhodium, platinum, palladium, or iridium, or other metals like nickel, cobalt and ruthenium, arranged in a fixed bed reactor. The residence time of the gas in a catalytic bed thereby is very short. Catalytic material can furthermore be in form of a sponge metal, a metal web or supported on ceramic porous bodies, for example.

By the above process, it possible to obtain a substantial and complete conversion of hydrocarbon with high selectivity for carbon monoxide and hydrogen. In order to obtain high selectivity, the residence time is usually very low and the gas maintained at elevated temperature for the shortest time possible.

Alternatively, selectivity is achieved by keeping the process temperature as low as possible. The main problem with the known process is to avoid ignition of the gas/oxygen mixture prior to contact with the catalyst. In particular, this is problematic when the process is carried out at elevated pressure.

GB patent No. 2,274,284 discloses use of 0.4 to 0.6 moles of oxygen per mole of methane in the preparation of synthesis gas from methane feedstock by the oxygen consuming reaction CH₄ + ½O₂ → CO + 2H₂, i.e. the amount of oxygen introduced into the reaction corresponds to the stoichio-metric required amount. The process is carried out at adiabatic conditions with intermediate indirect cooling between the catalytic layers of by intermediate direct cooling by adding cold gas streams between the layers.

In EP 330,751 process gas is heated by heat exchange with hot effluent gas between the catalytic layers in a heat exchanger.

The invention provides a process for the preparation of a hydrogen/carbon monoxide containing synthesis gas by catalytic partial oxidation of a hydrocarbon feed gas with a stoichiometric amount of oxygen, the process comprising a plurality of sequential, separated steps, whereby in each step only a small fraction of the stoichiometric amount of oxygen is added to the hydrocarbon feed gas is then passed through a catalytic zone, so that substantially complete conversion of the added amount of oxygen by reaction with a portion of the feed gas is obtained in each step, wherein the oxidation reaction is performed at substantially the same temperature in each of the steps by cooling the reaction mixture during each step with a suitable cooling medium.

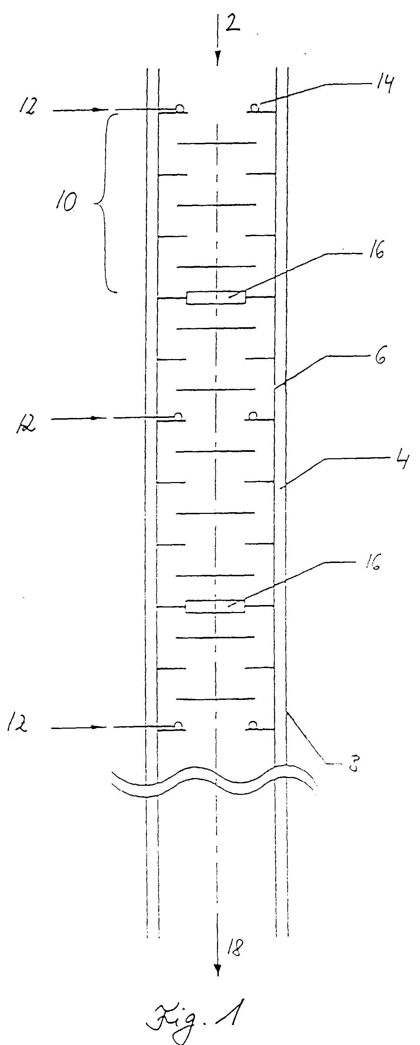

### BRIEF DESCRIPTION OF THE DRAWING

The sole figure is a schematic cross-section of a reaction apparatus according to a preferred embodiment of the present invention.

### DESCRIPTION OF THE PREFERRED EMBODIMENT

Referring to the sole figure, a reaction apparatus according to a specific embodiment of the invention is shown schematically in a representative cross-section. The process is performed on a hydrocarbon gas substrate **2** fed to a tubular reactor surrounded by a cooling medium, such as pressurized boiling water **4**, contained between reactor wall **6** and jacket **8** provided in the form of concentric tubes.

The reactor is further provided with static mixing zones **10** in the reaction volume. Toward the beginning of each mixing zone, oxygen **12** is provided through perforated rings **14**. Catalyst bodies **16** are arranged at predetermined distances from the oxygen supply rings. Product **18** is generated after gas **2** has passed through a predetermined number of catalyst reaction zones.

When carrying out the process of this invention as described above, excessive concentrations of oxygen will not be available in the reactor. As a result, a very high temperature in the reactor is prevented, all the catalyst material will be at a controlled temperature, and the selectivity of the process thereby is improved.

The invention further is useful in partial oxidation of higher hydrocarbons and in oxidative coupling reactions.

Although the present invention has been described in relation to particular embodiments thereof, many other variations and modifications and other uses will become apparent to those skilled in the art. It is preferred, therefore, that the present invention be limited not by the specific disclosure herein, but only by the appended claims.

## Claims

1. A process for the preparation of a hydrogen/carbon monoxide containing synthesis gas by catalytic partial oxidation of a hydrocarbon feed gas with a stoichiometric amount of oxygen, the process comprising a plurality of sequential, separated steps, whereby in each step only a small fraction of the stoichiometric amount of oxygen is added to the hydrocarbon feed gas and the feed gas is then passed through a catalytic zone, so that substantially complete conversion of the added amount of oxygen by reaction with a portion of the feed gas is obtained in each step, characterized in that the oxidation reaction is performed at substantially the same temperature in each of the steps by cooling the reaction mixture during each step with a suitable cooling medium.

2. The process of claim 1, wherein each step includes mixing the added amount of oxygen with the feed gas prior to passage through each catalytic zone.

## Patentansprüche

1. Verfahren zum Herstellen eines Wasserstoff/Kohlenmonoxid enthaltenden Synthesegases durch katalytische Partialoxidation eines Kohlenwasserstoff-Speisegases mit einer stöchiometrischen Menge an Sauerstoff, wobei das Verfahren eine Mehrzahl von aufeinanderfolgenden, getrennten Stufen umfasst, wobei in jeder Stufe nur ein kleiner Bruchteil der stöchiometrischen Menge an Sauerstoff zu dem Kohlenwasserstoff-Speisegas zugegeben wird, und das Speisegas anschließend durch eine katalytische Zone geleitet wird, so dass eine im Wesentlichen vollständige Umwandlung der zugegebenen Menge an Sauerstoff durch Reaktion mit einem Teil des Speisegases in jeder Stufe erhalten wird, **dadurch gekennzeichnet,** dass die Oxidationsreaktion bei der im Wesentlichen gleichen Temperatur in jeder der Stufen durch Kühlen des Reaktionsgemisches während jeder Stufe mit einem geeigneten Kühlmittel erfolgt.

2. Verfahren nach Anspruch 1, wobei jede Stufe das Vermischen der zugegebenen Menge an Sauerstoff mit dem Speisegas vor dem Durchgang durch jede katalytische Zone einschließt.

## Revendications

1. Procédé pour la préparation d'un gaz de synthèse contenant de l'hydrogène/monoxyde de carbone par oxydation catalytique partielle d'un gaz d'alimentation hydrocarboné avec une quantité stoechiométrique d'oxygène, le procédé comprenant plusieurs étapes séparées successives, par lequel dans chaque étape seulement une petite fraction de la quantité stoechiométrique d'oxygène est ajoutée au gaz d'alimentation hydrocarboné et le gaz d'alimentation est ensuite véhiculé à travers une zone catalytique, de sorte qu'une conversion substantiellement complète de la quantité d'oxygène ajoutée par réaction avec une partie du gaz d'alimentation est obtenue dans chaque étape, caractérisé en ce que la réaction d'oxydation est effectuée substantiellement à la même température dans chacune des étapes en refroidissant le mélange réactionnel pendant chaque étape avec un milieu refroidissant approprié.

2. Procédé selon la revendication 1, dans lequel chaque étape inclut le mélange de la quantité d'oxygène ajoutée avec le gaz d'alimentation avant le passage à travers chaque zone catalytique.
